# EUROPÄISCHE PATENTSCHRIFT

(11) **EP 3 405 528 B1**
(45) Veröffentlichungstag und Bekanntmachung des Hinweises auf die Patenterteilung: **01.01.2020**
(21) Anmeldenummer: 17700809.1
(22) Anmeldetag: 16.01.2017
(51) Int. Cl.: C09D 4/00, C09D 5/00, C08J 7/04, C08J 7/18, C09D 175/16, C08F 2/44, C08F 2/48, C08G 18/67, C08G 18/79, C08G 18/81, C08G 18/08, C08F 283/00, C09D 151/08

(54) **STRAHLENHÄRTBARES BESCHICHTUNGSMITTEL, VERFAHREN ZUR HERSTELLUNG VON KRATZFESTEN BESCHICHTUNGEN, VERWENDUNG DES BESCHICHTUNGSMITTELS UND SUBSTRAT BESCHICHTET MIT EINEM BESCHICHTUNGSMITTEL**
RADIATION CURABLE COATING AGENT, METHOD FOR MAKING ABRASION-RESISTANT COATINGS, USE OF THE COATING AGENT AND SUBSTRATE COATED WITH A COATING AGENT
AGENT DE REVETEMENT DURCISSABLE PAR RAYONNEMENT, PROCEDE DE FABRICATION DE REVETEMENT RESISTANT AUX RAYURES, UTILISATION DE L'AGENT DE REVETEMENT ET SUBSTRAT REVETU D'UN AGENT DE REVETEMENT

(30) Priorität: 21.01.2016 EP 16152256
(43) Veröffentlichungstag der Anmeldung: 28.11.2018
(73) Patentinhaber: BASF Coatings GmbH, 48165 Münster (DE)
(72) Erfinder: KAUFFER, Isabelle, 48165 Muenster (DE); KLEIN, Guenter, 48165 Muenster (DE); MAYENFELS, Peter, 48165 Muenster (DE); WENKING, Ulrike, 48165 Muenster (DE); LEITNER, Thomas, 48165 Muenster (DE)
(74) Vertreter: BASF IP Association
(86) Internationale Anmeldenummer: PCT/EP2017/050772
(87) Internationale Veröffentlichungsnummer: WO 2017/125339

(56) Entgegenhaltungen:
- EP-A1- 1 055 669
- DE-A1-102010 006 755
- DE-T2- 69 615 819
- US-A- 5 442 090
- DATABASE WPI Week 201408 Thomson Scientific, London, GB; AN 2012-L97910 XP002759053, -& KR 2012 0097817 A (KCC CO LTD) 5. September 2012 (2012-09-05)

## Beschreibung

Die vorliegende Erfindung betrifft ein strahlenhärtbares Beschichtungsmittel, insbesondere zur Herstellung einer kratzfesten Beschichtung auf Polycarbonatoberflächen, enthaltend mindestens ein Urethanacrylat aus einem Isocyanurat-Trimer des 1,6-Hexamethylendiisocyanats und Butandiolmonoacrylat. Die Erfindung betrifft auch ein Verfahren zur Herstellung von kratzfesten Beschichtungen auf Polycarbonatoberflächen, die Verwendung des Beschichtungsmittels und ein entsprechend beschichtetes Substrat.

Es ist bekannt, dass die Gläser bzw. Scheiben von Fahrzeugscheinwerfern eine optimale optische Ausbeute, eine hohe Transparenz, eine leichte Verformbarkeit, um sie in eine beliebige gewünschte Form bringen zu können, eine gute Robustheit (Festigkeit) und ein geeignetes Gewicht aufweisen müssen. Alle diese Eigenschaften können mit den traditionellen Gläsern bzw. Scheiben aus echtem Glas nicht erhalten werden. Die derzeitige Tendenz ist die, die Glasscheiben durch Scheiben aus Kunststoffmaterialien zu ersetzen, die leichter sind und leichter verformt werden können. Ein von diesem Standpunkt aus betrachtet optimales Material ist das Polycarbonat, das außerdem optische Eigenschaften aufweist, die gleich oder nahezu gleich denjenigen von echtem Glas sind.

Es ist jedoch bekannt, dass das Polycarbonat ein besonders weiches Material ist und damit leicht Kratzer erhält, was zu einer Verschlechterung der optischen Eigenschaften der Scheibe (des Glases) führt. Außerdem kann eine längere Einwirkung von Sonnenlicht oder von Umwelteinflüssen und/oder von chemischen Agentien zu einer Alterung führen, wodurch es spröde wird und vor allem eine Vergilbung und damit einen Verlust an Transparenz der Scheibe (des Glases) erleidet.

Um diese Probleme zu lösen, müssen die Scheiben bzw. Gläser für Scheinwerfer, die aus Polycarbonat (oder anderen ähnlichen Kunststoffmaterialien) hergestellt sind, mindestens auf ihrer äußeren Oberfläche, die während des Gebrauchs der Umwelt ausgesetzt ist, durch Aufbringen von speziellen transparenten Lacken geschützt werden.

Ein strahlenhärtbares Beschichtungsmittel der eingangs genannten Art ist aus der DE 696 15 819 T2 bekannt. Wenngleich das bekannte Beschichtungsmittel zu einem guten Schutz von Kunststoffscheiben bzw. -gläsern für Fahrzeugscheinwerfer gegen Kratzer und Witterungseinflüsse führt, so besteht doch das Bedürfnis, diesen Schritt weiter zu verbessern. Das bekannte Beschichtungsmittel weist außerdem den Nachteil auf, dass es mit hoher Schichtdicke aufgebracht werden muss, um einen ausreichenden Schutz zu erzielen. So beträgt die Trockenfilmdicke der mit dem bekannten Beschichtungsmittel hergestellten Lackschichten mindestens 20 µm vorzugsweise sogar mindestens 25 µm. Diese Schichtdicken führen zu einem hohen Materialverbrauch und sie sind heute nicht mehr zeitgemäß.

Es ist Aufgabe der vorliegenden Erfindung, ein strahlenhärtbares Beschichtungsmittel anzugeben, dass insbesondere für die Beschichtung von Polycarbonatoberflächen geeignet ist und zu gehärteten Lackschichten mit verbesserter Kratzfestigkeit und verbesserter Witterungsbeständigkeit bei verringerter Trockenfilmdicke führt.

Diese Aufgabe wird erfindungsgemäß durch ein strahlenhärtbares Beschichtungsmittel enthaltend mindestens ein Urethanacrylat hergestellt aus einem Isocyanurat-Trimer des 1,6-Hexamethylendiisocyanats und Butandiolmonoacrylat gelöst, wobei das Isocyanurat-Trimer einen NCO-Gehalt von 19,6 bis 24,0 Gew.-% und ein Äquivalentgewicht von 175 bis 214 aufweist, das Urethanacrylat ein Gewichtsverhältnis des Isocyanurat-Trimers zu dem Butandiolmonoacrylat von 1,0:0,65 bis 1,0:0,9 aufweist, dadurch gekennzeichnet dass das Beschichtungsmittel

| | | |
|---|---|---|
| i) | 45,0 bis 59,0 Gew.-% | des mindestens einen Urethanacrylats, |
| ii) | 25,0 bis 37,0 Gew.-% | mindestens eines tetrafunktionellen Polyesteracrylatmonomers, |
| iii) | 8,0 bis 12,0 Gew.-% | mindestens eines Dioldiacrylatesters und/oder mindestens eines Monoacrylatesters, |
| iv) | 2,3 bis 3,5 Gew.-% | mindestens eines Photoinitiators, |
| v) | 2,1 bis 3,1 Gew.-% | mindestens eines reaktiven Acryltriazol-UV-Absorbers, |
| vi) | 1,5 bis 2,0 Gew.-% | mindestens eines nicht reaktiven UV-Absorbers, |
| vii) | 0,7 bis 1,0 Gew.-% | mindestens eines sterisch gehinderten Amins und |
| viii) | 0,4 bis 0,9 Gew.-% | mindestens eines Verlaufsadditivs enthält, |

wobei sich die gewichtsprozentualen Bereiche auf die Summe der Festkörperanteile der genannten Komponenten i) bis viii) beziehen und deren Summe 100 Gew.-% beträgt.

Vorteilhafte Ausgestaltungen des erfindungsgemäßen, strahlenhärtbaren Beschichtungsmittels ergeben sich aus den Unteransprüchen.

Der Festkörperanteil ist der nicht-flüchtige Anteil einer Substanz oder einer Zusammensetzung. Der Festkörperanteil wird nach DIN EN ISO 3251:2008 bestimmt, indem 3 g der Substanz oder der Zusammensetzung für 60 Minuten bei 60 °C getrocknet werden. Der nach Trocknung verbleibende nichtflüchtige Anteil wird zur Einwaage ins Verhältnis gesetzt und gibt den Festkörperanteil der Substanz oder der Zusammensetzung.

Der Isocyanatgruppengehalt wird gemäß DIN EN ISO 11909 bestimmt.

Soweit hierin nicht anders angegeben, beziehen sich alle Norm-Angaben auf die zum Anmeldetag der vorliegenden Erfindung aktuelle Norm.

Bevorzugt ist das strahlenhärtbare Beschichtungsmittel ein Beschichtungsmittel, welches mit UV-Strahlung gehärtet wird. UV-Härtung bezeichnet eine durch UV-Strahlen induzierte chemische Reaktion. UV-Strahlung ist die Bezeichnung für denjenigen Teil der elektromagnetischen Strahlung, der den Wellenlängenbereich von 100 bis 400 nm umfasst.

Weiterhin bevorzugt ist das erfindungsgemäße Beschichtungsmittel ein Klarlack.

### Urethanacrylat

Urethanacrylate können im Allgemeinen hergestellt werden durch die Addition von Hydroxyalkylacrylaten, Diisocyanaten und Polyolen bzw. durch die direkte Addition von Hydroxyalkylacrylaten an Polyisocyanate. Sie ermöglichen es, das hohe Leistungsniveau und die Vielzahl der Anwendungsmöglichkeiten von Polyurethan-Beschichtungen mit der Aushärtungsgeschwindigkeit und der Effizienz der Photopolymerisation zu kombinieren. Urethanacrylate werden in strahlenhärtenden Beschichtungen für industrielle Anwendungen eingesetzt.

Das erfindungsgemäße Beschichtungsmittel enthält mindestens ein Urethanacrylat hergestellt aus einem Isocyanurat-Trimer des 1,6-Hexamethylendiisocyanats und Butandiolmonoacrylat, wobei das Isocyanurat-Trimer einen NCO-Gehalt von 19,6 bis 24,0 Gew.-% und ein Äquivalentgewicht von 175 bis 214 aufweist, das Urethanacrylat ein Gewichtsverhältnis des Isocyanurat-Trimers zu dem Butandiolmonoacrylat von 1:0,65 bis 1:0,9 aufweist.

In der DE 696 15 819 T2 wird ein Basisharz in der Beschichtungszusammensetzung eingesetzt, das aus einem Isocyanurat-Trimer des 1,6-Hexamethylendiisocyanats und Butandiolmonoacrylat hergestellt wird. Die eingesetzte Isocyanatverbindung weist einen NCO-Gehalt von 11,0 Gew.-% und ein Äquivalentgewicht von 382 auf. Im Rahmen der vorliegenden Erfindung wurde gefunden, dass die Kratzfestigkeit und die Witterungsbeständigkeit der resultierenden, gehärteten Lackfilme verbessert werden können durch ein Polyisocyanat mit einem höheren NCO-Gehalt und einem geringeren Äquivalentgewicht und durch eine veränderte Zusammensetzung an polymerisierbaren Monomeren und UV-Absorbern.

Es ist erfindungswesentlich, dass das Beschichtungsmittel 45,0 bis 59,0 Gew.-% des Urethanacrylats hergestellt aus einem Isocyanurat-Trimer des 1,6-Hexamethylendiisocyanats und Butandiolmonoacrylat bezogen auf die Summe der Festkörperanteile der genannten Komponenten i) bis viii) enthält. Bevorzugt enthält das Beschichtungsmittel 45,0 bis 55,0 Gew.-% des entsprechenden Urethanacrylats. Liegt der gewichtsprozentuale Anteil des Urethanacrylats unterhalb der zuvor aufgeführten Grenze, führt dies zu einer verschlechterten Reaktivität der Komponenten bei der Härtung des Beschichtungsmittels. Liegt der gewichtsprozentuale Anteil des Urethanacrylats oberhalb von 59,0 Gew.-% bezogen auf die Summe der Festkörperanteile der genannten Komponenten i) bis viii), führt dies zu einer verschlechterten Haftung der aus dem Beschichtungsmittel resultierenden Beschichtung gegenüber dem Substrat, auf welches das Beschichtungsmittel aufgetragen wurde.

### Tetrafunktionelles Polyesteracrylatmonomer

Das erfindungsgemäße Beschichtungsmittel enthält 25,0 bis 37,0 Gew.-% mindestens eines tetrafunktionellen Polyesteracrylatmonomers bezogen auf die Summe der Festkörperanteile der Komponenten i) bis viii). Bevorzugt enthält das Beschichtungsmittel 27,0 bis 37,0 Gew.-% mindestens eines tetrafunktionellen Polyesteracrylatmonomers bezogen auf die Summe der Festkörperanteile der Komponenten i) bis viii).

Liegt der gewichtsprozentuale Anteil des tetrafunktionellen Polyesteracrylatmonomers unterhalb der zuvor aufgeführten Grenze, führt dies zu einer verschlechterten Haftung der aus dem Beschichtungsmittel hergestellten Beschichtung gegenüber dem Substrat, auf welches das Beschichtungsmittel aufgetragen wurde. Liegt der gewichtsprozentuale Anteil des tetrafunktionellen Polyesteracrylatmonomers oberhalb der zuvor aufgeführten gewichtsprozentualen Grenzen führt dies zu einer verschlechterten Kratzbeständigkeit der resultierenden Beschichtung.

In Bezug auf die Komponente ii) ist es erfindungswesentlich, dass diese vier Acrylsäurebausteine enthält, das heißt tetrafunktionell in Bezug auf die Acrylsäurebausteine ist.

Das tetrafunktionelle Polyesteracrylatmonomer weist vorzugsweise als weiteres Strukturelement Sauerstoffatome in Form von Etherbindungen auf. Besonders bevorzugt weist das tetrafunktionelle Polyesteracrylatmonomer genau eine Etherbindung auf. Das besonders bevorzugte Vorhandensein von einer Etherbindung sorgt für eine verbesserte Chemikalienbeständigkeit der aus dem Beschichtungsmittel hergestellten Beschichtung. Ganz besonders bevorzugt ist das tetrafunktionelle Polyesteracrylatmonomer Di(trimethylolpropan)tetraacrylat.

### Dioldiacrylatester/Monoacrylatester

Erfindungsgemäß enthält das strahlenhärtbare Beschichtungsmittel als Komponente iii) 8,0 bis 12,0 Gew.-% mindestens eines Dioldiacrylatesters und/oder mindestens eines Monoacrylatesters. Besonders bevorzugt enthält das Beschichtungsmittel 9,0 bis 10,0 Gew.-% mindestens eines Dioldiacrylatesters und/oder mindestens eines Monoacrylatesters bezogen auf die Summe der Festkörperanteile der Komponenten i) bis viii). Demnach enthält das Beschichtungsmittel in den zuvor genannten gewichtsprozentualen Bereichen entweder mindestens einen Dioldiacrylatester oder mindestens einen Monoacrylatester oder eine Mischung aus mindestens einem Dioldiacrylatester und mindestens einem Monoacrylatester, wobei der Einsatz von Dioldiacrylatestern bevorzugt ist.

Als Monoacrylatester werden bevorzugt Trimethylolpropanformalacrylat, Butandiolmonoacrylat (4-HBA), Tetrahydrofurfurylacrylat (THFA), Octyldecylacrylat (ODA) oder Isodecylacrylat (IDA) verwendet. Besonders bevorzugt werden Butandiolmonoacrylat (4-HBA), Tetrahydrofurfurylacrylat (THFA), Octyldecylacrylat (ODA) oder Isodecylacrylat (IDA) verwendet.

Als Dioldiacrylatester werden bevorzugt solche Verbindungen verwendet, die in der längsten Kohlenstoffkette 2 bis 12 Kohlenstoffatome aufweisen. Ein besonders bevorzugter Dioldiacrylatester ist das 1,6 - Hexandioldiacrylat.

Der Einsatz der gewichtsprozentualen Menge von Dioldiacrylatestern und/oder Monoacrylatestern im erfindungsgemäßen Beschichtungsmittel kontrolliert die Anquellung des Substrats, insbesondere des Polycarbonats, auf welches das Beschichtungsmittel appliziert wird, so dass sich eine sogenannte IPL-Schicht (Interpenetration Layer) ausbilden kann. Dadurch wird die Haftung der Beschichtung auf dem Substrat gewährleistet. Die Ausbildung dieser sogenannten "IPL" - Schicht wird durch das Anlösen der obersten Schicht des Polycarbonatsubstrats erreicht. Die Anlösung darf aber nicht so stark sein, dass dadurch die Transparenz des beschichteten Polycarbonatsubstrats beeinträchtigt wird und sich demzufolge durch das Auftreten eines starken Haze bemerkbar macht. Diese "Anquellung" führt zu einer verbesserten Haftung durch eine Vergrößerung der Kontaktflächen zwischen dem Substrat und dem Beschichtungsmittel. Zusätzlich darf die Anquellung auch nicht zu stark sein, da dies zu einer verschlechterten Bewitterungsstabilität führt. Ist die "Anquellung" dagegen zu niedrig, führt dies zu einer verschlechterten Haftung auf dem Substrat.

### Photoinitiator

Das erfindungsgemäße Beschichtungsmittel enthält 2,3 bis 3,5 Gew.-% mindestens eines Photoinitiators bezogen auf die Summe der Festkörperanteile der Komponenten i) bis viii). Photoinitiatoren dienen dem Start der Vernetzungsreaktion unter Strahleneinwirkung.

Der mindestens eine Photoinitiator enthält vorteilhaft eine phosphorhaltige Verbindung. Entsprechende Handelsprodukte sind unter dem Namen Irgacure kommerziell erhältlich. Besonders vorteilhaft enthält der Photoinitiator eine Mischung mindestens einer phosphorhaltigen Verbindung und mindestens eines aromatischen α-Hydroxyketons.

Der bevorzugte Einsatz von zwei unterschiedlichen Pohotoinitiatoren wirkt sich vorteilhaft auf die Durchhärtung des Beschichtungsmittels aus, da damit eine Durchhärtung sowohl an der Oberfläche des Beschichtungsmittels als auch in der Nähe der Substratoberfläche erzielt werden kann.

### Lichtschutzmittel

Das erfindungsgemäße Beschichtungsmittel enthält verschiedene Lichtschutzmittel, welche eine Kombination aus mindestens zwei UV-Absorbern und mindestens einem sterisch gehinderten Amin als Radikalfänger enthalten. Die Aufgabe des Lichtschutzmittels ist es zu verhindern, dass chemisch reaktive Zwischenkomponenten gebildet werden, die zu einer Zersetzung des vernetzten Lackfilms führen können. Die durch die Spaltung von chemischen Bindungen entstehenden freien Radikale innerhalb einer Beschichtung, hervorgerufen durch schädliche UV-Strahlung aus der Umgebung, sollen so abgefangen und deaktiviert werden. Die durch die Spaltung einer chemischen Bindung entstehenden Radikale führen innerhalb der Beschichtung zu einer Kettenreaktion, die zu weiteren Bindungsspaltungen führt. Demzufolge ist der Einsatz eines Lichtschutzmittels erfindungswesentlich, um eine langfristig gute Wetterstabilität der aus dem erfindungsgemäßen Beschichtungsmittel hergestellten Beschichtung zu gewährleisten.

### UV-Absorber

Das erfindungsgemäße Beschichtungsmittel enthält die Kombination eines reaktiven Acryltriazol-UV-Absorbers und eines nicht reaktiven UV-Absorbers. "Reaktiv" bedeutet hier, dass der UV-Absorber bei der Strahlenhärtung mit den übrigen strahlenhärtbaren Bestandteilen reagiert und einpolymerisiert wird. Im Gegensatz dazu reagiert der nicht reaktive UV-Absorber nicht mit weiteren Bestandteilen des Beschichtungsmittels.

Das erfindungsgemäße Beschichtungsmittel enthält 2,1 bis 3,1 Gew.-% mindestens eines reaktiven Acryltriazol-UV-Absorbers und 1,5 bis 2,0 Gew.-% mindestens eines nicht reaktiven UV-Absorbers jeweils bezogen auf die Summe der Festkörperanteile der Komponente i) bis viii).

Der reaktive Acryltriazol-UV-Absorber ist vorteilhaft ein Acrylphenylbenzotriazol. Dieses wird durch die im Molekül vorhandene Acrylatfunktionalität bei der Vernetzungsreaktion chemisch in die resultierende Beschichtung eingebunden und somit fixiert, so dass eine Migration unterbunden wird. Kommerzielle Produkte sind unter dem Handelsnamen Chisorb 593 der Firma Double Bond Chemical erhältlich.

Der nicht reaktive UV-Absorber ist vorteilhaft eine Verbindung auf Basis eines 1,3,5-Triazins. Kommerzielle Produkte sind unter dem Handelsnamen Tinuvin400 der Firma BASF SE (ehemals Ciba) erhältlich.

Der erfindungsgemäße Einsatz einer Kombination mindestens eines reaktiven Acryltriazol-UV-Absorbers und mindestens eines nicht reaktiven UV-Absorbers sorgt dafür, dass in der aus dem erfindungsgemäßen Beschichtungsmittel hergestellten Beschichtung Strahlung aus der Umgebung in entsprechende Rotations- und Schwingungsenergie dieser Moleküle umgewandelt wird, so dass Schädigungen von chemischen Bindungen innerhalb einer Beschichtung vermieden werden und somit die Spaltung von Bindungen unterbunden werden kann.

### Radikalfänger - Sterisch gehindertes Amin

Das erfindungsgemäße Beschichtungsmittel enthält 0,7 bis 1,0 Gew.-% mindestens eines sterisch gehinderten Amins bezogen auf die Summe der Festkörperanteile der Komponenten i) bis viii), welche als Radikalfänger fungieren.

Als Lichtschutzmittel auf Basis sterisch gehinderter Amine wird vorteilhaft ein Diester der Sebacinsäure eingesetzt. Geeignete kommerzielle Produkte sind unter dem Handelsnamen Tinuvin123 der Firma BASF SA (ehemals Ciba) erhältlich.

### Verlaufsadditive

Das erfindungsgemäße Beschichtungsmittel enthält 0,4 bis 0,9 Gew.-% mindestens eines Verlaufsadditivs bezogen auf die Summe der Festkörperanteile der Komponenten i) bis viii).

Vorzugsweise kommt in dem erfindungsgemäßen Beschichtungsmittel als Verlaufsmittel ein Polysiloxan modifiziertes Polymer mit ungesättigten Endgruppen zum Einsatz. Geeignete kommerzielle Produkte sind unter der Produktlinie EFKA der BASF erhältlich.

Das Verlaufsadditiv ist verantwortlich für das Erzielen eines guten Decklackstandes sowie einer guten Appearance der aus dem erfindungsgemäßen Beschichtungsmittel hergestellten Beschichtung, insbesondere für den Fall dass das erfindungsgemäße Beschichtungsmittel als Klarlack verwendet wird.. In der Regel zeigen Klarlacke bei ausreichend hoher Schichtdicke, in der Regel bei > 25 µm, einen guten Verlauf, der sich bei verringerten Schichtdicken in der Regel verschlechtert. Da das erfindungsgemäße Beschichtungsmittel vorzugsweise mit niedrigen Schichtdicken im Bereich von 8 bis 25 µm appliziert wird, ist der Einsatz eines geeigneten Verlaufsadditivs im Bereich von 0,4 bis 0,9 Gew.-% mindestens eines Verlaufsadditivs bezogen auf die Summe der Festkörperanteile der Komponenten i) bis viii) erfindungswesentlich. Wird der zuvor genannte gewichtsprozentuale Bereich überschritten, kommt es zu einer verschlechterten Kratzbeständigkeit der aus dem Beschichtungsmittel hergestellten Beschichtung.

### Lösemittel

Das erfindungsgemäße Beschichtungsmittel wird bevorzugt durch die Verwendung von organischen Lösemitteln auf die zur Applikation gewünschte Viskosität eingestellt. Vorteilhaft enthält das Beschichtungsmittel 27,0 bis 70,0 Gew.-% an organischem Lösemittel bezogen auf das Gesamtgewicht des Beschichtungsmittels.

Als organische Lösemittel kommen vorteilhaft alle üblichen und dem Fachmann bekannten organischen Lösemittel in Betracht, die einerseits eine gute Löslichkeit der Komponenten ermöglichen und andererseits zur Erzielung einer guten Lagerstabilität bekannt sind und ein gutes Applikationsverhalten des Beschichtungsmittels ermöglichen. Dazu sind insbesondere Alkohole, wie i-Propanol und n-Butanol, Ester, wie n-Butylacetat und 1-Methoxypropylacetat und/oder Ketone, wie Methylethylketon und Methylisobutylketon geeignet. Bei der Wahl der Lösemittel bzw. der Lösemittelkombination ist zu beachten, dass diese so gewählt werden, dass das Polycarbonatsubstrat bei der Applikation des Beschichtungsmittels nicht so stark angequollen wird, dass nach der Härtung des Beschichtungsmittels dessen Transparenz negativ beeinflusst wird, was sich durch einen erhöhten Haze bzw. Glanzschleier bemerkbar macht. Durch die Wahl der Lösemittel kann auch die Haftung der aus dem Beschichtungsmittel resultierenden Beschichtung zum Substrat beeinflusst werden. Es ist allerdings darauf zu achten, dass die Wahl der Lösemittel so erfolgt, dass eine gute Haftwirkung durch das Anquellen des Substrats erreicht wird, ohne jedoch eine Vermattung des gehärteten Beschichtungmittels zu bewirken.

Durch die variable gewichtsprozentuale Einstellung des Lösemittelanteils bezogen auf das Gesamtgewicht des Beschichtungsmittels, kann der Festkörperanteil des Beschichtungsmittels dahingehend vorteilhaft variiert werden, dass das erfindungsgemäße Beschichtungsmittel sowohl als Flow-Coating als auch als Spray Coating auf ein Substrat appliziert werden kann. Zur Anwendung im Flow-Coating-Bereich ist ein Festkörpergehalt von 27,0 bis 50,0 Gew.-% bezogen auf das Gesamtgewicht des Beschichtungsmittels vorteilhaft. Im Spray-Coating-Bereich ist ein Festkörpergehalt von 60,0 bis 70,0 Gew.-% bezogen auf das Gesamtgewicht des Beschichtungsmittels vorteilhaft. Im Allgemeinen können für das erfindungsgemäße Beschichtungsmittel aber auch höhere Festkörpergehalte als die zuvor genannten bezogen auf das Gesamtgewicht des Beschichtungsmittels realisiert werden. In diesen Fällen ist allerdings darauf zu achten, dass sich durch den reduzierten Lösemittelanteil bezogen auf das Gesamtgewicht des Beschichtungsmittels keine Nachteile hinsichtlich des Decklackstandes und des Verlaufs ergeben.

Die Erfindung betrifft auch ein Verfahren zur Herstellung von kratzfesten Beschichtungen auf Polycarbonatoberflächen durch i) Auftragen eines erfindungsgemäßen Beschichtungsmittels auf eine Polycarbonatoberfläche und ii) Härten des Beschichtungsmittels mit UV-Strahlung.

Vorteilhaft wird die kratzfeste Beschichtung mit Trockenschichtdicken von 8 bis 25 µm aufgetragen, besonders bevorzugt mit Trockenschichtdicken von 10 bis 20 µm. Die Bestimmung der Trockenschichtdicke einer Klarlackbeschichtung erfolgt mit einem Weisslichtinterferometer. Die Bestimmung der Trockenschichtdicke einer Beschichtung, die keine Klarlackbeschichtung ist, erfolgt mittels Querschlifferstellung und anschließender mikroskopischer Untersuchung dieser Querschliffe.

Die Erfindung betrifft weiterhin die Verwendung eines erfindungsgemäßen Beschichtungsmittels zur Herstellung einer Beschichtung zum Schutz von Oberflächen von Fahrzeugscheinwerfern gegen Kratzer und Witterungseinflüsse.

Letztlich betrifft die Erfindung auch ein Substrat, das mit einem erfindungsgemäßen gehärteten Beschichtungsmittel beschichtet ist. Bevorzugt handelt es sich bei dem Substrat um ein Substrat aus Polycarbonat.

Im Folgenden wird die Erfindung anhand von Ausführungsbeispielen und Vergleichsbeispielen näher erläutert.

### Herstellbeispiel 1: Herstellung des Urethanacrylats 1 nach DE 696 15 819 T2 (Vergleich)

Man stellt das Basisharz her, indem man die folgenden Komponenten in den angegebenen Mengenverhältnissen (ausgedrückt in Gramm) miteinander mischt:

| | |
|---|---|
| DESMODUR 2010 (BAYER) | 44,7 |
| Butandiolmonoacrylat | 15,3 |
| TMP-Formal (LAROMER 8887) | 38,4 |
| Dibutylzinndilaurat | 0,152 |
| Ethylacetat | 1,368 |

### Herstellbeispiel 2: Herstellung des Urethanacrylats 2 (erfindungsgemäß)

Es werden 170,70 g des Isocyanattrimers (Desmodur N3300, Firma Bayer) in einen 1000ml-Dreihalskolben gefüllt. Die Apparatur ist mit einem KPG-Blattrührer, einem Tropftrichter und einem Gaszufuhrstück zur Einleitung von Magerluft bestückt.

Das Isocyanat wird mit 83,05 g des Reaktivverdünners Di-TMP-Tetraacrylat (Ebecryl 140 der Firma Allnex) verdünnt. Weiterhin wird die Vorlage mit 0,4 g Hydrochinon (der Firma MitsuiChemicals) stabilisiert und anschließend die Lösung auf 40°C erwärmt.

Sobald die Reaktionstemperatur erreicht ist, wird eine Mischung aus 133,75 g Butandiolmonoacrylat (der Firma BASF SE), 0.05 g Coscat 83 (der Firma Erbslöh), 49,25 g Hexandioldiacrylat (Laromer HDDA der Firma BASF SE), 61,05 g Di-TMP-Tetraacrlat (Ebecryl 140 der Firma Allnex) und 1,75 g Methoxypropanol (Solvenon PM der Firma BASF SE) zugetropft. Während der Zugabezeit (ca. 4 Stunden) darf die Reaktionstemperatur von 60°C nicht überschritten werden.

Nach beendeter Zugabe wird die Reaktionsmischung bei 60°C gehalten und stündlich der NCO-Gehalt bestimmt.

Nachdem der NCO-Gehalt von 0% erreicht ist, wird die Produktmischung auf 50°C abgekühlt und filtriert.

Coscat 83 ist eine Organobismuthverbindung, die als Katalysator für die Urethanbildung eingesetzt wird.

Unter Verwendung der beiden vorstehend beschriebenen Urethanacrylate wurden strahlenhärtbare Beschichtungsmittel hergestellt. Hierbei wurden die folgenden Rohstoffe eingesetzt:

| | |
|---|---|
| HOSTAVIN TB-02 | Mischung eines Triazin-UV-Absorbers mit einem acylierten Lichtschutzmittel auf Basis eines sterisch gehinderten Amins |
| Irgacure TPO-L | Photoinitiator Ethylphenyl(2,4,6-trimethylbenzoyl)phosphinat |
| Irgacure 184 | Photoinitiator (1-Hydroxy-Cyklohexyl-Phenylketon) |
| Irgacure 819 | Photoinitiator (Bis(2,4,6-Trimethylbenzoyl)-Phenylphosphinoxid) |
| EFKA-3883 | Verlaufsadditiv (Polysiloxanmodifiziertes Polymer) |
| EFKA-3888 | Verlaufsadditiv (Polysiloxanmodifiziertes Polyisocyanate) |
| SARBOX SB400 | Lackadditiv (Carbonsäure und Carbonsäureanhydrid enthaltendes Methacrylat-Oligomer) |
| CHISORB 593 | UV-Absorber (2-(2'-Hydroxy-5'-Methacrylyloxiethylphenyl)-2H-Benzotriazol) |
| TINUVIN 400 | UV-Absorber (Hydroxyphenyltriazin) |
| TINUVIN 123 (Bis(octyloxytetramethylpiperydyl)sebacat) | Sterisch gehindertes Amin (HALS) basierend auf einer Amino-Ether Functionalität (NOR-HALS) |

Gemäß der nachgestehenden Tabelle 1 wurden erfindungsgemäße und nicht erfindungsgemäße Beschichtungsmittel hergestellt. Die Zahlenangaben in der Tabelle 1 bedeuten Gewichtsteile.

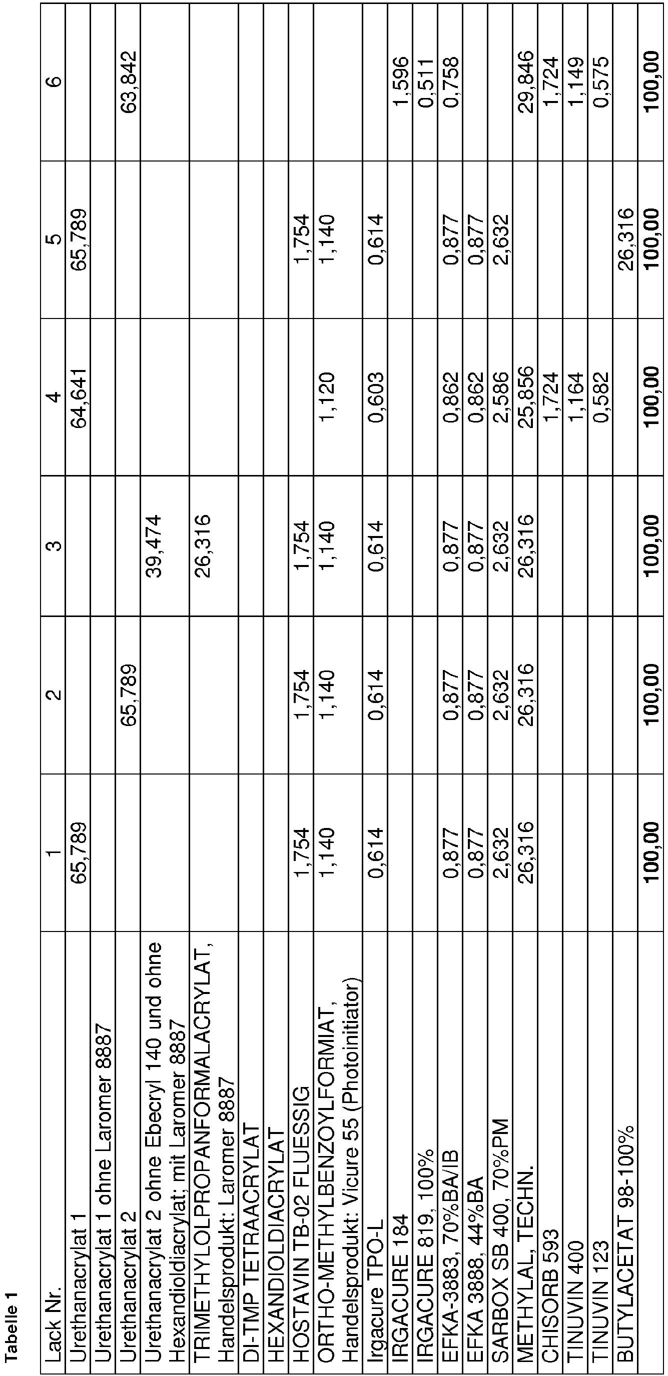

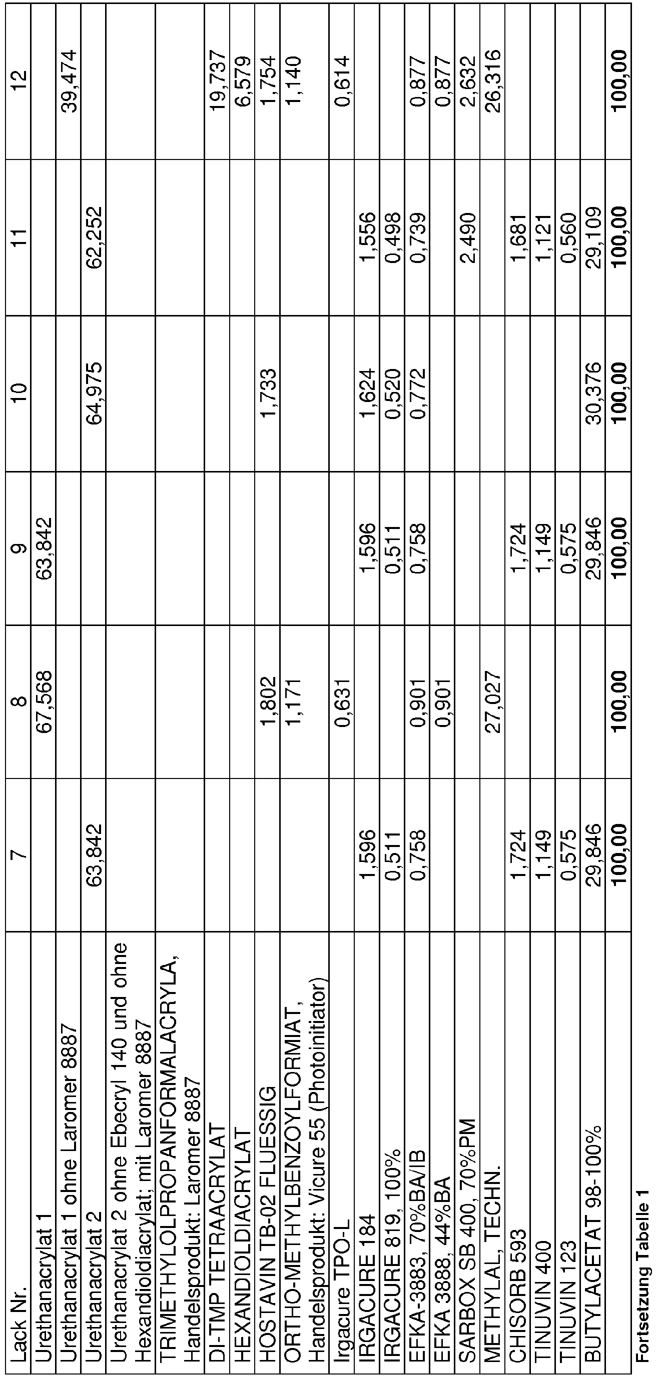

Die Beschichtungsmittel 1 bis 12 wurden folgendermaßen appliziert und gehärtet: Die Spritzapplikation erfolgte mit einer Fliessbecherpistole (z.B. DeVilbiss Typ GTI Gravity Spray Gun) mit einer 1,5 mm Düse bei einem Spritz-Druckluft von 3 bar. Die erforderliche Schichtdicke wurde in 2 Spritzgängen aufgetragen.
Ablüftung: 1 Minute bei 23 °C, 5 Minuten 80 - 90°C im Umluftofen, anschließend 30 Sekunden Abkühlung.
Härtung mit UV-Strahlung: 2,5 - 3,5 J/cm² (Dosis mit IL390 von Fa. International Light gemessen)

Die erzielte Schichtdicke der aus dem Beschichtungsmittel hergestellten Beschichtung (Trockenschichtdicke) lag bei 11 - 18 µm, die sogenannte "IPL" - Schichtdicke ("Interpenetration Layer") lag bei 3 - 5 µm.

Die Schichtdickenmessungen erfolgten mit einem Weisslichtinterferometer (z.B.von der Fa. Fuchs mit der Bezeichnung "FTM-Lite UVNIR - Schichtdickenmessgerät".) Der nach der Applikation der Proben ermittelte Haze - Wert soll < 1% sein.

Die Messung des Hazes erfolgte mit dem BYK-Gardner - Messgerät "Haze-Gard *Plus*"*.* Dieses Messgerät ist ein standardisiertes Instrument zur Messung von Transparenz nach der ASTM-Norm D1003-13. Das Gerät dient zur Bestimmung der optischen Qualität von transparenten Beschichtungen. Mit diesem Messgerät wird der Ausgangs-Haze sowie der Haze nach Durchführung von Kratzprüfungen (dem Taber Abrazer - Test) gemessen.

Die Kratzfestigkeit der gehärteten Lackschichten wurde folgendermaßen geprüft:
Die Prüfung der Kratzfestigkeit erfolgte mit dem Abraser - Testgerät Typ 5155 der Fa. Taber Industries. Die Kratzprüfungen wurden entsprechend der ASTM - Norm ASTM-D1044-13 (Standard Test Method for Resistance of Transparent Plastics to Surface Abrasion, Standard by ASTM International, 09 / 01 / 2013) durchgeführt und getestet. Die Auswertung erfolgte gemäß der ASTM - Norm ASTM-D1003-13 (Standard Test Method for Haze and Luminous Transmittance of Transparent Plastics).

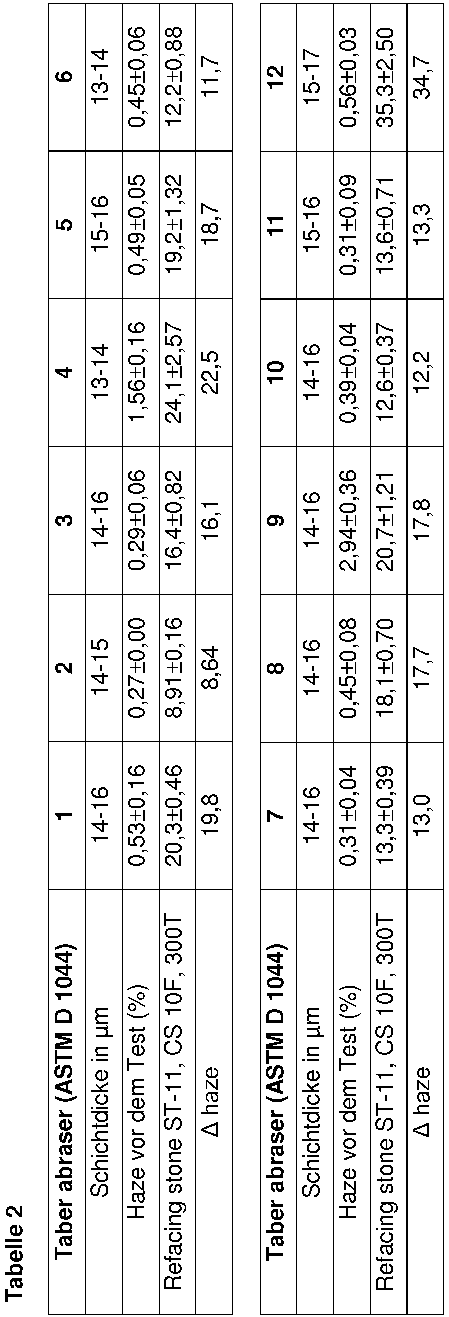

### Auswertung

Eine gute Kratzfestigkeit der Beschichtungen auf Polycarbonatlampengehäusen liegt vor, wenn diese bei der Durchführung des Taber - Abraser - Test einen Δ-Hazewert von ≤ 15 (nach 300 Umdrehungen im Taber - Abraser - Test) zeigen. Hochkratzfeste Systeme zeigen einen Δ-Hazewert, der unter 10 (nach 300 Umdrehungen im Taber - Abraser - Test) liegt.

## Patentansprüche

1. Strahlenhärtbares Beschichtungsmittel, insbesondere zur Herstellung einer kratzfesten Beschichtung auf Polycarbonatoberflächen, enthaltend mindestens ein Urethanacrylat hergestellt aus einem Isocyanurat-Trimer des 1,6-Hexamethylendiiosocyanats und Butandiolmonoacrylat, wobei das Isocyanurat-Trimer einen NCO-Gehalt von 19,6 bis 24,0 Gew.-% und ein Äquivalentgewicht von 175 bis 214 aufweist,
das Urethanacrylat ein Gewichtsverhältnis des Isocyanurat-Trimers zu dem Butandiolmonoacrylat von 1,0:0,65 bis 1,0:0,9 aufweist, **dadurch gekennzeichnet, dass** das Beschichtungsmittel
| | | |
|---|---|---|
| i) | 45,0 bis 59,0 Gew.-% | des mindestens einen Urethanacrylats, |
| ii) | 25,0 bis 37,0 Gew.-% | mindestens eines tetrafunktionellen Polyesteracrylatmonomers, |
| iii) | 8,0 bis 12,0 Gew.-% | mindestens eines Dioldiacrylatesters und/oder mindestens eines Monoacrylatesters |
| iv) | 2,3 bis 3,5 Gew.-% | mindestens eines Photoinitiators |
| v) | 2,1 bis 3,1 Gew.-% | mindestens eines reaktiven Acryltria zol-UV-Absorbers |
| vi) | 1,5 bis 2,0 Gew.-% | mindestens eines nicht reaktiven UV-Absorbers |
| vii) | 0,7 bis 1,0 Gew.-% | mindestens ein sterisch gehindertes Amin, |
| viii) | 0,4 bis 0,9 Gew.-% | mindestens eines Verlaufsadditivs |
enthält,
wobei sich die gewichtsprozentualen Bereiche auf die Summe der Festkörperanteile der genannten Komponenten i) bis viii) beziehen und deren Summe 100 Gew.-% beträgt.

2. Beschichtungsmittel nach Anspruch 1, **dadurch gekennzeichnet, dass** das Beschichtungsmittel 45,0 bis 55,0 Gew.-% des Urethanacrylats bezogen auf die Summe der Festkörperanteile der Komponenten i) bis viii) enthält.

3. Beschichtungsmittel nach Anspruch 1 oder 2, **dadurch gekennzeichnet, dass** das tetrafunktionelle Polyesteracrylatmonomer eine Etherbindung aufweist.

4. Beschichtungsmittel nach einem der Ansprüche 1 bis 3, **dadurch gekennzeichnet, dass** die Komponente iii) ein Dioldiacrylatester ist.

5. Beschichtungsmittel nach Anspruch 4, **dadurch gekennzeichnet, dass** der Dioldiacrylatester in der längsten Kohlenstoffkette 2 bis 12 Kohlenstoffatome enthält.

6. Beschichtungsmittel nach einem der Ansprüche 1 bis 5, **dadurch gekennzeichnet, dass** der Photoinitiator mindestens eine phosphorhaltige Verbindung enthält.

7. Beschichtungsmittel nach Anspruch 6, **dadurch gekennzeichnet, dass** der Photoinitiator eine Mischung mindestens einer phosphorhaltigen Verbindung und mindestens eines aromatischen α-Hydroxyketons enthält.

8. Beschichtungsmittel nach einem der Ansprüche 1 bis 7, **dadurch gekennzeichnet, dass** der reaktive Acryltriazol-UV-Absorber ein Acrylphenylbenzotriazol ist.

9. Beschichtungsmittel nach einem der Ansprüche 1 bis 8, **dadurch gekennzeichnet, dass** das sterisch gehinderte Amin ein Diester der Sebacinsäure ist.

10. Beschichtungsmittel nach einem der Ansprüche 1 bis 9, **dadurch gekennzeichnet, dass** das Beschichtungsmittel mit UV-Strahlung härtbar ist.

11. Beschichtungsmittel nach einem der Ansprüche 1 bis 10, **dadurch gekennzeichnet, dass** das Beschichtungsmittel ein Klarlack ist.

12. Verfahren zur Herstellung von kratzfesten Beschichtungen auf Polycarbonatoberflächen durch
i) Auftragen eines Beschichtungsmittels gemäß einem der Ansprüche 1 bis 11 auf eine Polycarbonatoberfläche und
ii) Härten des Beschichtungsmittels mit UV-Strahlung.

13. Verfahren nach Anspruch 12, **dadurch gekennzeichnet, dass** die kratzfeste Beschichtung eine Trockenschichtdicke von 8 bis 25 µm aufweist.

14. Verwendung eines Beschichtungsmittels gemäß einem der Ansprüche 1 bis 11 zur Herstellung einer Beschichtung zum Schutz von Oberflächen von Fahrzeugscheinwerfern gegen Kratzer und Witterungseinflüsse.

15. Substrat beschichtet mit einem gehärteten Beschichtungsmittel gemäß einem der Ansprüche 1 bis 11.

## Claims

1. Radiation-curable coating composition, especially for producing a scratch-resistant coating on polycarbonate surfaces, comprising at least one urethane acrylate prepared from an isocyanurate trimer of 1,6-hexamethylene diisocyanate and butanediol monoacrylate, the isocyanurate trimer having an NCO content of 19.6 to 24.0 wt% and an equivalent weight of 175 to 214,
the urethane acrylate having a weight ratio of the isocyanurate trimer to the butanediol monoacrylate of 1.0:0.65 to 1.0:0.9, **characterized in that** the coating composition comprises
| | | |
|---|---|---|
| i) | 45.0 to 59.0 wt% | of the at least one urethane acrylate, |
| ii) | 25.0 to 37.0 wt% | of at least one tetrafunctional polyester acrylate monomer, |
| iii) | 8.0 to 12.0 wt% | of at least one diol diacrylate ester and/or of at least one monoacrylate ester, |
| iv) | 2.3 to 3.5 wt% | of at least one photoinitiator, |
| v) | 2.1 to 3.1 wt% | of at least one reactive acryloyltriazole UV absorber, |
| vi) | 1.5 to 2.0 wt% | of at least one nonreactive UV absorber, |
| vii) | 0.7 to 1.0 wt% | of at least one sterically hindered amine, |
| viii) | 0.4 to 0.9 wt% | of at least one flow control additive, |
the weight percentage ranges being based on the sum of the solids contents of the stated components i) to viii) and their sum making 100 wt%.

2. Coating composition according to Claim 1, **characterized in that** the coating composition comprises 45.0 to 55.0 wt% of the urethane acrylate, based on the sum of the solids contents of components i) to viii).

3. Coating composition according to Claim 1 or 2, **characterized in that** the tetrafunctional polyester acrylate monomer has an ether bond.

4. Coating composition according to any of Claims 1 to 3, **characterized in that** component iii) is a diol diacrylate ester.

5. Coating composition according to Claim 4, **characterized in that** the diol diacrylate ester comprises 2 to 12 carbon atoms in the longest carbon chain.

6. Coating composition according to any of Claims 1 to 5, **characterized in that** the photoinitiator comprises at least one phosphorus-containing compound.

7. Coating composition according to Claim 6, **characterized in that** the photoinitiator comprises a mixture of at least one phosphorus-containing compound and at least one aromatic α-hydroxy ketone.

8. Coating composition according to any of Claims 1 to 7, **characterized in that** the reactive acryloyltriazole UV absorber is an acryloylphenolbenzotriazole.

9. Coating composition according to any of Claims 1 to 8, **characterized in that** the sterically hindered amine is a diester of sebacic acid.

10. Coating composition according to any of Claims 1 to 9, **characterized in that** the coating composition is curable with UV radiation.

11. Coating composition according to any of Claims 1 to 10, **characterized in that** the coating composition is a clearcoat material.

12. Method for producing a scratch-resistant coating on a polycarbonate surface by
i) applying a coating composition according to any of Claims 1 to 11 to a polycarbonate surface and
ii) curing the coating composition with UV radiation.

13. Method according to Claim 12, **characterized in that** the scratch-resistant coating has a dry film thickness of 8 to 25 µm.

14. Use of a coating composition according to any of Claims 1 to 11 for producing a coating to protect surfaces of vehicle headlamps against scratches and effects of weathering.

15. Substrate coated with a cured coating composition according to any of Claims 1 to 11.

## Revendications

1. Produit de revêtement durcissable par rayonnement, en particulier pour la préparation d'un revêtement résistant aux rayures sur des surfaces de polycarbonate, contenant au moins un acrylate d'uréthane préparé à partir d'un trimère d'isocyanurate du diisocyanate de 1,6-hexaméthylène et de monoacrylate de butanediol, le trimère d'isocyanurate présentant une teneur en NCO de 19,6 à 24,0 % en poids et un poids équivalent de 175 à 214,
l'acrylate d'uréthane présentant un rapport pondéral du trimère d'isocyanurate au monoacrylate de butanediol de 1,0:0,65 à 1,0:0,9, **caractérisé en ce que** le produit de revêtement contient
i) 45,0 à 59,0 % en poids de l'au moins un acrylate d'uréthane,
ii) 25,0 à 37,0 % en poids d'au moins un monomère d'acrylate de polyester tétrafonctionnel,
iii) 8,0 à 12,0 % en poids d'au moins un ester de diacrylate de diol et/ou d'au moins un ester de monoacrylate
iv) 2,3 à 3,5 % en poids d'au moins un photoinitiateur
v) 2,1 à 3,1 % en poids d'au moins un absorbeur UV réactif de type acryltriazole
vi) 1,5 à 2,0 % en poids d'au moins un absorbeur UV non réactif
vii) 0,7 à 1,0 % en poids d'au moins une amine stériquement encombrée,
viii) 0,4 à 0,9 % en poids d'au moins un additif promoteur d'écoulement,
les plages de pourcentage pondéral se rapportant à la somme des solides desdits composants i) à viii) et leur somme étant de 100 % en poids.

2. Produit de revêtement selon la revendication 1, **caractérisé en ce que** le produit de revêtement contient 45,0 à 55,0 % en poids de l'acrylate d'uréthane par rapport à la somme des solides des composants i) à viii).

3. Produit de revêtement selon la revendication 1 ou 2, **caractérisé en ce que** le monomère d'acrylate de polyester tétrafonctionnel présente une liaison éther.

4. Produit de revêtement selon l'une quelconque des revendications 1 à 3, **caractérisé en ce que** le composant iii) est un ester de diacrylate de diol.

5. Produit de revêtement selon la revendication 4, **caractérisé en ce que** l'ester de diacrylate de diol contient 2 à 12 atomes de carbone dans la plus longue chaîne carbonée.

6. Produit de revêtement selon l'une quelconque des revendications 1 à 5, **caractérisé en ce que** le photoinitiateur contient au moins un composé contenant du phosphore.

7. Produit de revêtement selon la revendication 6, **caractérisé en ce que** le photoinitiateur contient un mélange d'au moins un composé contenant du phosphore et d'au moins une α-hydroxycétone aromatique.

8. Produit de revêtement selon l'une quelconque des revendications 1 à 7, **caractérisé en ce que** l'absorbeur UV réactif de type acryltriazole est un acrylphénylbenzotriazole.

9. Produit de revêtement selon l'une quelconque des revendications 1 à 8, **caractérisé en ce que** l'amine stériquement encombrée est un diester de l'acide sébacique.

10. Produit de revêtement selon l'une quelconque des revendications 1 à 9, **caractérisé en ce que** le produit de revêtement est durcissable par rayonnement UV.

11. Produit de revêtement selon l'une quelconque des revendications 1 à 10, **caractérisé en ce que** le produit de revêtement est un vernis transparent.

12. Procédé pour la préparation de revêtements résistants aux rayures sur des surfaces de polycarbonate par
i) application d'un produit de revêtement selon l'une quelconque des revendications 1 à 11 sur une surface de polycarbonate et
ii) durcissement du produit de revêtement avec un rayonnement UV.

13. Procédé selon la revendication 12, **caractérisé en ce que** le revêtement résistant aux rayures présente une épaisseur de couche sèche de 8 à 25 µm.

14. Utilisation du produit de revêtement selon l'une quelconque des revendications 1 à 11 pour la préparation d'un revêtement pour la protection de surfaces de phares de véhicules contre les rayures et les intempéries.

15. Substrat revêtu par un produit de revêtement durci selon l'une quelconque des revendications 1 à 11.
